# EUROPEAN PATENT SPECIFICATION

(11) **EP 1 894 841 B1**
(45) Date of publication and mention of the grant of the patent: **15.10.2008**
(21) Application number: 05782617.4
(22) Date of filing: 03.08.2005
(51) Int. Cl.: B64F 1/36, F24F 13/02, F16F 1/20

(54) **CONDITIONED AIR HOSE EXTENSION AND RETRACTION DEVICE FOR AIRCRAFT**
VORRICHTUNG ZUM AUS- UND EINFAHREN EINES KLIMATISIERTEN LUFTSCHLAUCHES FÜR EIN FLUGZEUG
DISPOSITIF D'EXTRACTION ET DE RECUPERATION DE TUBE D'AIR CONDITIONNE POUR AVIONS

(30) Priority: 24.06.2005 ES 200501545
(43) Date of publication of application: 05.03.2008
(73) Proprietor: Servicios y Mantenimientos Aeroportuarios Serclimasa, S.L., 28850 Torrejon de Ardoz (ES)
(72) Inventor: SERI MORENO, Luis Miguel, c/ Ebanisteria, 15 E-28850 TORREJON DE ARDOZ(Madrid) (ES); SANCHEZ RUBIO, Fernando, c/ Ebanisteria, 15 E-28850 TORREJON DE ARDOZ(Madrid) (ES); PEÑA HARO, Bienvenido, c/ Ebanisteria, 15 E-28850 TORREJON DE ARDOZ(Madrid) (ES)
(74) Representative: Esteban Perez-Serrano, Maria Isabel
(86) International application number: PCT/ES2005/070118
(87) International publication number: WO 2006/136624

(56) References cited:
- US-A- 3 521 316
- US-A- 4 543 677
- US-A1- 2004 209 565

## Description

### OBJECT OF THE INVENTION

The object of the present invention is to provide a device for extending and retracting an air conditioning hose for aircraft capable of being mounted to the access bridge of the aircraft for its subsequent connection to the air conditioning intake of that aircraft.

Such a device is known for example from US-A-3521316, which discloses all the features of the preamble of the independent claim 1. The device of the present invention, as defined by the features of claim 1, includes a motor that actuates a cable inside the air conditioning hose and circular elastic elements attached to the cable, which, when butting against disks of smaller diameter fastened to the hose, enable the correct extension or retraction of that hose, preventing it from bending or tangling and thus from any resulting damage.

Further, the invention includes rigid elements located alongside the hose, providing a passage means for the cable and guiding it.so as to fix its position throughout all of the hose sections.

Similarly, the hose comprises a telescopic tube, not necessarily airtight, for mounting the device on the access bridge of the aircraft.

### BACKGROUND OF THE INVENTION

In accordance with international aircraft regulations, the use of the on-board air conditioning system is not permitted while the aircraft is parked.

It is necessary, however, to maintain a reasonable temperature in the fuselage tank, especially when considering the possible rise in temperature when the aircraft is standing directly under the sun during hot days.

For this reason, air conditioning systems well known in the state of the art provide cooling air from the airport to the aircraft by means of a hose.

The preconditioned air intake on the aircraft can be located at a longer or shorter distance from the end of the access bridge carrying the hose. For this reason the airports dispose of hose-trolleys in order to join those two points.

The problems related to the handling and transport of those trolleys to the aircraft air intake to which the hose is coupled, as well as the handling of the hose itself are well known.

This task is slow and requires great physical effort on the part of the operator, who needs to ensure that the entire connection hose is free from bends or tangles which could prevent the air from flowing correctly, regardless of the distance between the two points.

The present invention provides a device for extending or retracting the air conditioning hose, eliminating the presence of bends or tangles which hinder the correct air circulation, as well as reducing the time and effort required when coupling the hose to the preconditioned air intake of the aircraft.

### DESCRIPTION OF THE INVENTION

The object of the present invention is to provide a device for extending and retracting an air conditioning hose for aircraft, which can be mounted to the passenger bridge of the aircraft for its subsequent connection to the air conditioning intake of that aircraft.

The device comprises a telescopic tube with the air conditioning hose disposed along its interior, the hose being connected by means of an elbow to the hose section coming from the airport air supply network.

A motor located beside the elbow has its shaft connected to a steel cable, which, passing through the elbow by means of an orifice sealed with a gasket to prevent air leaks, is disposed in the interior of the air conditioning hose and runs parallel to the telescopic tube.

The hose section closest to the motor, which is the section that retracts and extends, is provided with a series of preferably circular elastic elements with an internal orifice having a bushing inserted therein as a passage means for the cable.

The interior of the non-retracting hose section is equipped with a series of plates with a central orifice which provides a guide for the steel cable, said platens being attached to the interior wall of the hose in such way that the central orifice is maintained in the geometrical centre of the corresponding hose section, being the cable fastened to one of these platens at the free end of the hose.

Both sides of the elastic elements are provided with stops, which are joined to the cable so that they transfer the cable movement to each of the elastic elements, sliding to one side or the other depending on the direction of the motor rotation.

A traction force must be applied on the hose in order for it to extend or retract correctly. For this purpose, disks with an interior diameter slightly smaller than that of the elastic elements are mounted along the extending and retracting hose section. These disks are attached to the interior wall of the hose so as to minimise the resistance to the air stream.

In this way, when the motor is actuated in order to retract the hose, the traction is transmitted to the elastic elements through the stops mounted on both sides of these elements, moving them towards the motor.

When one of these elastic elements comes into contact with a disk, said elastic element deforms due to the resistance provided by the disk, while, at the same time, the elastic element applies the traction force on the disk.

Because the disk is attached to the interior wall of the hose, this force is used directly to retract the part of the hose located on the side of the disk that is closest to the motor.

In this way, a part of the hose is retracted correctly without bends or tangles by means of a series of elastic elements and disks disposed along the hose section that needs to be retracted.

If the hose is to be extended, the operating mechanism is the same, so that when the operator pulls from the free end of the hose, each elastic element comes into contact with its corresponding disk placed furthest from the motor, resulting in the extension of that section of the hose.

The only difference between the extension process in relation to the retraction process is that the motor is disengaged, thus not presenting any resistance to the operator when pulling from the hose.

Starting from the elbow adjacent to the motor, the telescopic tube comprises a tube of a smaller cross section that has a tube of a larger cross section sliding over its exterior, which has a further elbow mounted on its free end, determining the inclination of the hose at the outlet of the telescopic tube.

The outlet of the hose is equipped with sensors, which establish if the hose is connected or not to the preconditioned air intake on the aircraft, in order to permit or prevent the activation of the air flow from the airport air supply network.

### DESCRIPTION OF THE DRAWINGS

A preferred embodiment of the present invention is given below, with reference to the accompanying illustrative drawings, which shall not limit by their selection or graphical representation the advantages and particular characteristics of this invention.
Figures 1A to 1C illustrate the sequence of extension or retraction of a hose section belonging to the device for extending and retracting an air conditioning hose for aircraft, showing a cross sectional view of the hose with its different elements arranged in its interior.
Figure 2 is a view of a non-retractable (non-extendable) hose section, showing a cross section of the hose with its different elements arranged in its interior.

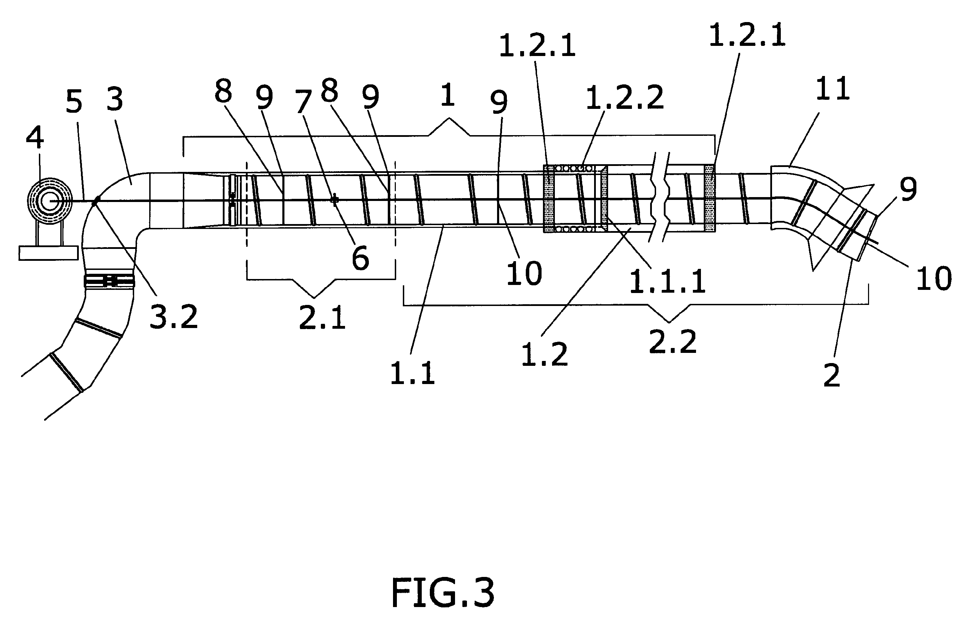

Figure 3 is a perspective view of the device for extending and retracting an air conditioning hose for aircraft.

### PREFERRED EMBODIMENT OF THE INVENTION

In view of the above mentioned, the present invention relates to a device for extending and retracting an air conditioning hose for aircraft, which can be mounted to the access bridge of the aircraft for its subsequent connection to the air conditioning intake of that aircraft.

The device comprises a telescopic tube (1) with an air conditioning hose (2) disposed along its interior, the hose (2) being connected by means of an elbow (3) to the airport air supply network.

A motor (4) located adjacently to the inlet elbow (3) has its shaft connected to a steel cable (5) made preferably of steel and disposed in the interior of the air conditioning hose (2) running parallel to the telescopic tube (1), so that the cable (5) passes from the motor (4) to the hose (2) by means of an orifice (3.1) sealed with a gasket (3.2) to prevent air leaks between the cable (5) and the orifice (3.1).

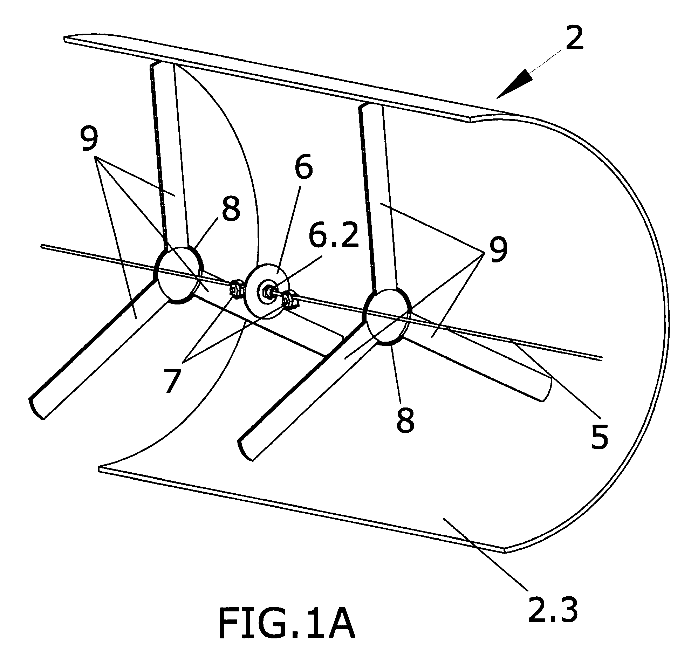

Figure 1A is a detailed view of the interior of the hose section (2), which is capable of being retracted and extended and will be referred to as retractable-extendable section (2.1). Said detailed view shows a preferably circular elastic element (6) with a central orifice (6.1) having a bushing (6.2) inserted therein as a passage means for the cable (5).

Both sides of the elastic element (6) are provided with stops (7) connected to the cable (5), which push against the elastic element (6) when the cable moves (depending on the hose being retracted or extended, one or the other stop will be pushing).

Disks (8) of preferably toroidal shape and a diameter slightly smaller than that of the elastic element (6) are located at a certain distance at each side of the elastic element (6), said disks (8) being attached to the interior wall (2.3) of the hose (2) by means of a series of preferably equidistant bands (9), so that the axis of the hose (2) coincides with that of the disks (8).

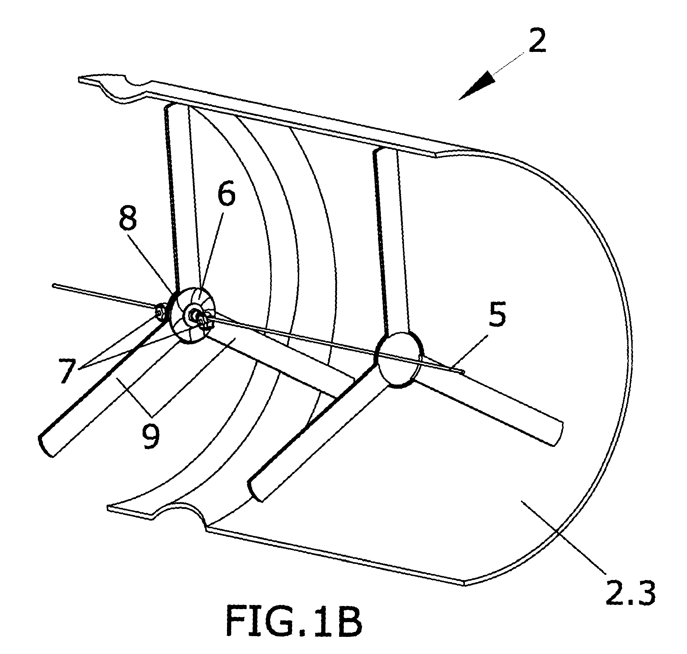

Figure 1B shows the same detail as in Figure 1A at the instance when the elastic element (6) comes into contact with a disk (8) as a result of being pushed by one of the stops (7) and leading to the subsequent deformation of said elastic element (6).

The force applied by the elastic element (6) on the disk (8) results in the retraction (extension) of this retractable-extendable section (2.1) of the hose (2).

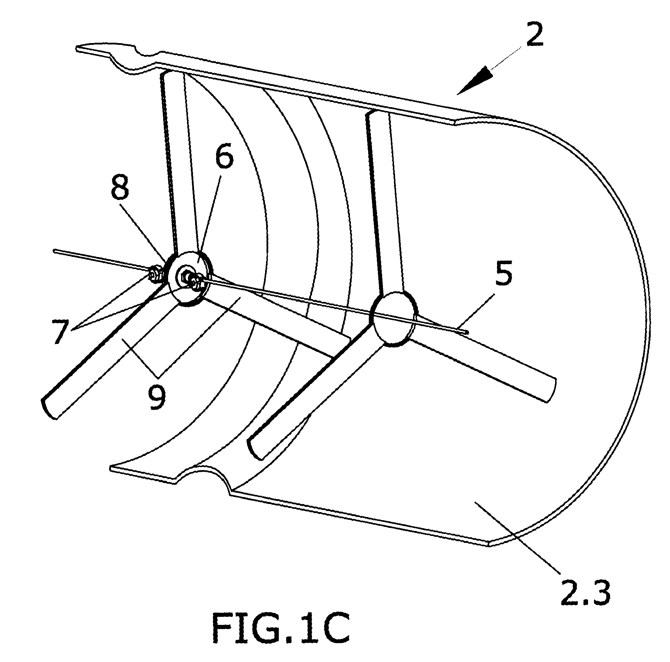

Figure 1C shows the same detail as in Figures 1A and 1B at the instance when the elastic element (6) has passed through the interior of the disk (8), said elastic element (6) regaining its initial shape and finalising the retraction (extension) of the retractable-extendable section (2.1) of the hose (2).

During the extension process the motor (4) is disengaged and the traction force is provided by the operator when pulling from the hose (2).

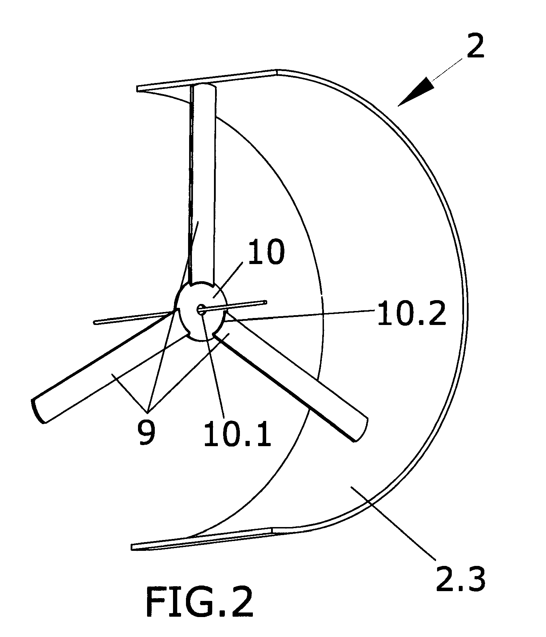

The interior of the retractable-extendable section (2.2) of the hose (2) detail in Figure 2) is provided with a series of platens (10) with a central orifice (10.1) which provides a guide means for the cable (5), being the platens (10) attached to the interior wall (2.3) of the hose (2) by means of a series of preferably equidistant bands (9) which pass through slots (10.2) provided in the proximity of the periphery of the platens (9).

Starting from the inlet elbow (3), the telescopic tube (1) comprises a tube (1.1) of a smaller cross section that has a tube (1.2) of a larger cross section sliding over its exterior onto which the retractable-extendable section (2.2) of the hose (2) is fastened using a cylindrical ring (1.2.1), preferably made of Teflon material, in combination with a bearing (1.2.2) fastened to the tube (1.2) of larger cross section, as well as a further cylindrical ring (1.2.1) fastened to end of the tube (1.2) of larger cross section, through which the hose (2) protrudes to attach an outlet elbow (11).

A truncated cone-shaped ring (1.1.1), preferably made of Teflon material, is provided on the free end of the tube (1.1) of smaller cross section in order to seal the joint between that tube (1.1) and the tube (1.2) of larger cross section.

In this preferred embodiment of the invention the telescopic tube (1), with the hose (2) disposed in its interior, is fastened to the lower part of the aircraft access bridge.

While the preferred embodiments have been illustrated and described, as noted above, changes can be made in the selection of materials, form, size and layout of the component parts without departing from the spirit and scope of the invention. Accordingly, the scope of the invention is not limited by the disclosure of the preferred embodiment, being this sufficient to allow those skilled in the art to reproduce this invention.

## Claims

1. Conditioned air hose extension and retraction device for aircraft comprising a telescopic tube (1) with an air conditioning hose (2) disposed in its interior, having a motor (4) actuating on a cable (5) made preferably of steel and disposed in the interior of the air conditioning hose (2), **characterised in that** it further comprises two sections:
• a section (2.1) of the hose (2) capable of being retracted or extended that incorporates a series of elastic, preferably circular elements (6) with a central orifice (6.1) providing a passage means for the cable (5), both sides of each elastic element (6) being provided with stops (7) fastened to the cable (5) so that when said cable (5) moves, the corresponding stop (7) pushes against the elastic element (6) which then comes into contact with a disk (8) joined to the hose (2) and located on each side of the elastic element (6), resulting in the retraction or extension of the section (2.1) of the hose (2) that is capable of retracting or extending until the elastic element (6) has passed through the interior of the disk (8), and
• a section (2.2) of the hose (2) not capable of being retracted or extended that incorporates a series of platens (10) joined to the hose (2) with a central orifice (10.1) which provides a guide means for the cable (5), where the telescopic tube (1) comprises a tube (1.1) of smaller cross section that has a tube (1.2) of larger cross section sliding over its exterior onto which the non retractable-extendable section (2.2) of the hose (2) is fastened.

2. A conditioned air hose extension and retraction device for aircraft according to claim 1 **characterised in that** the air conditioning hose (2) is connected to the airport supply network by means of an inlet elbow (3).

3. A conditioned air hose extension and retraction device for aircraft according to claim 1 **characterised in that** during the extension process the motor (4) is disengaged so that the traction force is provided by the operator when pulling from the hose (2).

4. A conditioned air hose extension and retraction device for aircraft according to claim 1 **characterised in that** the disks (8) are attached to an interior wall (2.3) of the hose (2) by means of a series preferably equidistant bands (9).

5. A conditioned air hose extension and retraction device for aircraft according to claim 1 **characterised in that** the platens (10) are attached to an interior wall (2.3) of the hose (2) by means of a series preferably equidistant bands (9) which pass through slots (10.2) provided in the proximity of the periphery of the platens (9).

6. A conditioned air hose extension and retraction device for aircraft according to claim 1 **characterised in that** the interior of the orifice (6.1) of the elastic element is provided with a bushing (6.2) to facilitate the passage of the cable (5).

7. A conditioned air hose extension and retraction device for aircraft according to claim 1 **characterised in that** the disks (8) have a toroidal shape.

8. A conditioned air hose extension and retraction device for aircraft according to claim 1 **characterised in that** the tube (1.2) of larger cross section is provided with a cylindrical ring (1.2.1) preferably made of Teflon material, in combination with a bearing (1.2.2) at the end joining the tube (1.1) of smaller cross section, as well as a further cylindrical ring (1.2.1) at the end through which the hose (2) exits to attach an outlet elbow (11).

9. A conditioned air hose extension and retraction device for aircraft according to claim 1 **characterised in that** a truncated cone-shaped ring (1.1.1), preferably made of Teflon material, is provided on the free end of the tube (1.1) of smaller cross section in order to seal the joint between that tube of smaller cross section (1.1) and the tube (1.2) of larger cross section.

10. A conditioned air hose extension and retraction device for aircraft according to claim 1 **characterised in that** the telescopic tube (1) is fastened to the lower part of the aircraft access bridge.

11. A conditioned air hose extension and retraction device for aircraft according to claim 1 **characterised in that** the section (2.1) of the hose (2) capable of being retracted or extended is the section located closest to the motor (4).

12. A conditioned air hose extension and retraction device for aircraft according to claim 1 **characterised in that** the platens (10) are substantially circular.

13. A conditioned air hose extension and retraction device for aircraft according to claim 1 **characterised in that** the outlet of the hose (2) is equipped with sensors which establish if the hose (2) is connected or not to the preconditioned air intake of the aircraft in order to permit or prevent the activation of the air flow from the airport air supply network.

14. A conditioned air hose extension and retraction device for aircraft according to claim 1 **characterised in that** the cable (5) passes through the inlet elbow (3) from the motor (4) to the hose (2) by means of an orifice (3.1) sealed with a gasket (3.2).

## Patentansprüche

1. Luftgekühlte Vorrichtung zur Ausfahrung und Einfahrung eines Druckluftschlauchs für Luftfahrzeuge, welche ein Teleskoprohr (1) umfasst, in dessen Innerem ein Luftkühlungsschlauch (2) angeordnet ist, wobei diese über einen Motor (4) verfügt, der auf ein Kabel (5) einwirkt, das vorzugsweise aus Stahl gefertigt ist und in dem Inneren des Luftkühlungsschlauchs (2) angeordnet ist, und **dadurch gekennzeichnet, dass** diese weiterhin zwei Abschnitte umfasst:
• einen Abschnitt (2.1) des Schlauchs (2), der eingefahren oder ausgefahren werden kann, welcher eine Reihe von elastischen, vorzugsweise kreisförmigen Elementen (6) mit einer zentralen Öffnung (6.1) einschließt, die ein Durchlassmittel für das Kabel (5) zur Verfügung stellt, wobei beide Seiten von jedem elastischen Element (6) mit Anschlägen (7) ausgestattet sind, die an dem Kabel (5) befestigt sind, so dass, wenn sich das besagte Kabel (5) bewegt, der entsprechende Anschlag (7) gegen das elastische Element (6) drückt, das dann in Kontakt mit einer Scheibe (8) tritt, die mit dem Schlauch (2) verbunden und auf jeder Seite des elastischen Elements (6) befindlich ist, was in der Einfahrung oder Ausfahrung des Abschnitts (2.1) des Schlauchs (2) resultiert, der eingefahren oder ausgefahren werden kann, bis das elastische Element (6) das Innere der Scheibe (8) passiert hat, und
• einen Abschnitt (2.2) des Schlauchs (2), der nicht eingefahren oder ausgefahren werden kann, welcher eine Reihe von mit dem Schlauch (2) verbundenen Platten (10) mit einer zentralen Öffnung (10.1) einschließt, welche ein Führungsmittel für das Kabel (5) zur Verfügung stellt, wobei das Teleskoprohr (1) ein Rohr (1.1) mit kleinerem Druchmesser umfasst, welches ein Rohr (1.2) mit größerem Durchmesser besitzt, das über dessen Oberfläche gleitet, auf welcher der nicht einfahrbare/ausfahrbare Abschnitt (2.2) des Schlauchs (2) befestigt ist.

2. Eine luftgekühlte Vorrichtung zur Ausfahrung und Einfahrung eines Druckluftschlauchs für Luftfahrzeuge nach Anspruch 1, **dadurch gekennzeichnet, dass** der Luftkühlungsschlauch (2) mittels eines Einlasskrümmers (3) mit dem Flughafenversorgungsnetz verbunden ist.

3. Eine luftgekühlte Vorrichtung zur Ausfahrung und Einfahrung eines Druckluftschlauchs für Luftfahrzeuge nach Anspruch 1, **dadurch gekennzeichnet, dass** der Motor (4) während des Ausfahrvorgangs ausgekuppelt ist, so dass die Zugkraft seitens des Bedieners zur Verfügung gestellt wird, wenn dieser an dem Schlauch (2) zieht.

4. Eine luftgekühlte Vorrichtung zur Ausfahrung und Einfahrung eines Druckluftschlauchs für Luftfahrzeuge nach Anspruch 1, **dadurch gekennzeichnet, dass** die Scheiben (8) mit einer Innenwand (2.3) des Schlauchs (2) mittels einer Reihe vorzugsweise äquidistanter Bänder (9) verbunden sind.

5. Eine luftgekühlte Vorrichtung zur Ausfahrung und Einfahrung eines Druckluftschlauchs für Luftfahrzeuge nach Anspruch 1, **dadurch gekennzeichnet, dass** die Platten (10) mit einer Innenwand (2.3) des Schlauchs (2) mittels einer Reihe vorzugsweise äquidistanter Bänder (9) verbunden sind, die durch Schlitze (10.2) verlaufen, welche in der Nähe des Umfangs der Platten (9) zur Verfügung gestellt sind.

6. Eine luftgekühlte Vorrichtung zur Ausfahrung und Einfahrung eines Druckluftschlauchs für Luftfahrzeuge nach Anspruch 1, **dadurch gekennzeichnet, dass** das Innere der Öffnung (6.1) des elastischen Elements mit einer Buchse (6.2) ausgestattet ist, um die Durchführung der Kabel (5) zu ermöglichen.

7. Eine luftgekühlte Vorrichtung zur Ausfahrung und Einfahrung eines Druckluftschlauchs für Luftfahrzeuge nach Anspruch 1, **dadurch gekennzeichnet, dass** die Scheiben (8) eine ringförmige Form haben.

8. Eine luftgekühlte Vorrichtung zur Ausfahrung und Einfahrung eines Druckluftschlauchs für Luftfahrzeuge nach Anspruch 1, **dadurch gekennzeichnet, dass** das Rohr (1.2) mit größerem Durchmesser mit einem zylinderförmigen Ring (1.2.1) ausgestattet ist, der vorzugsweise aus Teflonmaterial gefertigt ist, in Verbindung mit einem Wälzlager (1.2.2) an dem Ende, das mit dem Rohr (1.1) mit kleinerem Durchmesser verbunden ist, sowie mit einem weiteren zylinderförmigen Ring (1.2.1) an dem Ende, durch das der Schlauch (2) austritt, um einen Auslasskrümmer (11) zu befestigen.

9. Eine luftgekühlte Vorrichtung zur Ausfahrung und Einfahrung eines Druckluftschlauchs für Luftfahrzeuge nach Anspruch 1, **dadurch gekennzeichnet, dass** ein kegelstumpfartiger Ring (1.1.1), der vorzugsweise aus Teflonmaterial gefertigt ist, an dem freien Ende des Rohrs (1.1) mit kleinerem Durchmesser vorgesehen ist, um die Fuge zwischen dem Rohr mit kleinerem Durchmesser (1.1) und dem Rohr mit größerem Durchmesser (1.2) abzudichten.

10. Eine luftgekühlte Vorrichtung zur Ausfahrung und Einfahrung eines Druckluftschlauchs für Luftfahrzeuge nach Anspruch 1, **dadurch gekennzeichnet, dass** das Teleskoprohr (1) mit dem unteren Teil der Fluggastbrücke verbunden ist.

11. Eine luftgekühlte Vorrichtung zur Ausfahrung und Einfahrung eines Druckluftschlauchs für Luftfahrzeuge nach Anspruch 1, **dadurch gekennzeichnet, dass** der Abschnitt (2.1) des Schlauchs (2), der eingefahren der ausgefahren werden kann, derjenige Abschnitt ist, der dem Motor (4) am nächsten liegt.

12. Eine luftgekühlte Vorrichtung zur Ausfahrung und Einziehung eines Druckluftschlauchs für Luftfahrzeuge nach Anspruch 1, **dadurch gekennzeichnet, dass** die Platten (10) im Wesentlichen kreisförmig sind.

13. Eine luftgekühlte Vorrichtung zur Ausfahrung und Einziehung eines Druckluftschlauchs für Luftfahrzeuge nach Anspruch 1, **dadurch gekennzeichnet, dass** der Auslass des Schlauchs (2) mit Sensoren ausgerüstet ist, die feststellen, ob der Schlauch (2) mit dem vorgekühlten Lufteinlass des Flugzeugs verbunden oder nicht verbunden ist, um die Aktivierung des Luftstroms von dem Flughafenversorgungsnetz zu erlauben oder zu verhindern.

14. Eine luftgekühlte Vorrichtung zur Ausfahrung und Einziehung eines Druckluftschlauchs für Luftfahrzeuge nach Anspruch 1, **dadurch gekennzeichnet, dass** das Kabel (5) durch den Einlasskrümmer (3) des Motors (4) zu dem Schlauch (2) mittels einer Öffnung (3.1) verläuft, die mit einer Dichtung (3.2) abgedichtet ist.

## Revendications

1. Dispositif d'extension et de rétraction de tuyau flexible à air conditionné pour avion comprenant un tube télescopique (1) avec un tuyau flexible à air conditionné (2) disposé à l'intérieur de celui-ci, possédant un moteur (4) agissant sur un câble (5) fabriqué de préférence en acier et disposé à l'intérieur à l'intérieur du tuyau flexible à air conditionné (2); **caractérisé en ce qu'**il comprend en outre deux sections:
• une section (2.1) du tuyau flexible (2) en mesure d'être rétractée ou étirée qui comporte une série d'éléments élastiques de préférence circulaires (6) avec un orifice central (6.1) fournissant un moyen de passage pour le câble (5), les deux côtés de chaque élément élastique (6) étant munis d'arrêts (7) fixés au câble (5) afin que lorsque ledit câble (5) bouge, l'arrêt correspondant (7) pousse contre l'élément élastique (6) qui est alors en contact avec un disque (8) assemblé au tuyau flexible (2) et situé de chaque côté de l'élément élastique (6), cela ayant pour conséquence la rétraction ou extension de la section (2.1) du tuyau flexible (2) qui est en mesure de se rétracter ou de s'étirer jusqu'à ce que l'élément élastique (6) soit passé à travers l'intérieur du disque (8), et
• une section (2.2) du tuyau flexible (2) n'étant pas en mesure d'être rétractée ou étirée qui comporte une série de plateaux (10) assemblés au tuyau flexible (2) avec un orifice central (10.1) qui fournit un moyen de guidage pour le câble (5), où le tube télescopique (1) comprend un tube (1.1) de plus petite section transversale qui possède un tube (1.2) de plus grande section transversale glissant sur sa partie externe sur laquelle la section ne pouvant être ni rétractée ni étirée (2.2) du tuyau flexible (2) est fixée.

2. Un dispositif d'extension et de rétraction de tuyau flexible à air conditionné pour avion selon la revendication 1 **caractérisé en ce que** le tuyau flexible à air conditionné (2) est connecté au réseau d'alimentation de l'aéroport au moyen d'un coude d'admission (3).

3. Un dispositif d'extension et de rétraction de tuyau flexible à air conditionné pour avion selon la revendication 1 **caractérisé en ce que** durant le processus d'extension le moteur (4) est débrayé pour que la force de traction soit fournie par l'opérateur lorsqu'il tire sur le tuyau flexible (2).

4. Un dispositif d'extension et de rétraction de tuyau flexible à air conditionné pour avion selon la revendication 1 **caractérisé en ce que** les disques (8) sont fixés à une paroi interne (2.3) du tuyau flexible (2) au moyen d'une série de bandes de préférence équidistantes (9).

5. Un dispositif d'extension et de rétraction de tuyau flexible à air conditionné pour avion selon la revendication 1 **caractérisé en ce que** les plateaux (10) sont fixés à une paroi interne (2.3) du tuyau flexible (2) au moyen d'une série de bandes de préférence équidistantes (9) qui passent à travers des fentes (10.2) prévues à proximité de la périphérie des plateaux (9).

6. Un dispositif d'extension et de rétraction de tuyau flexible à air conditionné pour avion selon la revendication 1 **caractérisé en ce que** l'intérieur de l'orifice (6.1) de l'élément élastique est pourvu d'une bague (6.2) pour faciliter le passage du câble (5).

7. Un dispositif d'extension et de rétraction de tuyau flexible à air conditionné pour avion selon la revendication 1 **caractérisé en ce que** les disques (8) ont une forme toroïdale.

8. Un dispositif d'extension et de rétraction de tuyau flexible à air conditionné pour avion selon la revendication 1 **caractérisé en ce que** le tube (1.2) de plus grande section transversale est pourvu d'un anneau cylindrique (1.2.1) fabriqué de préférence en téflon, combiné avec un coussinet (1.2.2) à l'extrémité d'assemblage du tube (1.1) de plus petite section transversale, ainsi que d'un anneau cylindrique supplémentaire (1.2.1) à l'extrémité à travers laquelle le tuyau flexible (2) sort pour la fixation d'un coude de refoulement (11).

9. Un dispositif d'extension et de rétraction de tuyau flexible à air conditionné pour avion selon la revendication 1 **caractérisé en ce qu'**un anneau en forme de cône tronqué (1.1.1), fabriqué de préférence en téflon, est prévu à l'extrémité libre du tube (1.1) de plus petite section transversale afin de former un raccordement étanche entre ce tube de plus petite section transversale (1.1) et le tube (1.2) de plus grande section transversale.

10. Un dispositif d'extension et de rétraction de tuyau flexible à air conditionné pour avion selon la revendication 1 **caractérisé en ce que** le tube télescopique (1) est fixé à la partie inférieure du pont d'accès à l'avion.

11. Un dispositif d'extension et de rétraction de tuyau flexible à air conditionné pour avion selon la revendication 1 **caractérisé en ce que** la section (2.1) du tuyau flexible (2) en mesure d'être rétractée ou étirée est la section située le plus près du moteur (4).

12. Un dispositif d'extension et de rétraction de tuyau flexible à air conditionné pour avion selon la revendication 1 **caractérisé en ce que** les plateaux (10) sont substantiellement circulaires.

13. Un dispositif d'extension et de rétraction de tuyau flexible à air conditionné pour avion selon la revendication 1 **caractérisé en ce que** la sortie du tuyau flexible (2) est équipée de capteurs qui déterminent si le tuyau flexible (2) est connecté ou non à l'admission d'air préconditionné de l'avion afin de permettre ou d'empêcher l'activation du flux d'air depuis le réseau d'alimentation en air de l'aéroport.

14. Un dispositif d'extension et de rétraction de tuyau flexible à air conditionné pour avion selon la revendication 1 **caractérisé en ce que** le câble (5) passe à travers le coude d'admission (3) depuis le moteur (4) jusqu'au tuyau flexible (2) au moyen d'un orifice (3.1) raccordé avec un joint d'étanchéité (3.2).
